(19) Europäisches Patentamt
European Patent Office
Office européen des brevets

(11) EP 4 564 046 A1

(12) EUROPEAN PATENT APPLICATION

(43) Date of publication:
04.06.2025 Bulletin 2025/23

(51) International Patent Classification (IPC):
G01S 7/35 $^{(2006.01)}$     G01S 13/88 $^{(2006.01)}$
G01S 13/34 $^{(2006.01)}$

(21) Application number: 23213792.7

(22) Date of filing: 01.12.2023

(52) Cooperative Patent Classification (CPC):
G01S 7/358; G01S 13/88; G01S 13/34

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Infineon Technologies AG
85579 Neubiberg (DE)

(72) Inventors:
• WILL, Christoph Jürgen
81673 München (DE)
• WEILAND, Lorenz
80637 München (DE)

(74) Representative: 2SPL Patentanwälte PartG mbB
Landaubogen 3
81373 München (DE)

(54) **METHOD, APPARATUS AND RADAR SYSTEM**

(57) A method is proposed comprising obtaining an IQ representation of radar data indicating a received radar signal, determining an approximation of the IQ representation, the approximation having a spiral configuration, and determining a phase of the received radar signal based on the approximation.

Fig. 5

## Description

### Field

The present disclosure relates to phase determination based on IQ data. Examples relate to a method, an apparatus and a radar system.

### Background

Conventional phase determination techniques may fail to accurately compensate spiral-shaped distortions of IQ data in radar measurements. This may lead to erroneous measurement results. Hence, there may be a demand for an improved phase determination.

### Summary

This demand is satisfied by the subject matter of the independent claims.

Some aspects of the present disclosure relate to a method comprising obtaining an IQ representation of radar data indicating a received radar signal, determining an approximation of the IQ representation, the approximation having a spiral configuration, and determining a phase of the received radar signal based on the approximation.

Some aspects of the present disclosure relate to an apparatus comprising processing circuitry configured to obtain an IQ representation of radar data indicating a received radar signal, determine an approximation of the IQ representation, the approximation having a spiral configuration, and determine a phase of the received radar signal based on the approximation.

### Brief description of the Figures

Some examples of apparatuses and/or methods will be described in the following by way of example only, and with reference to the accompanying figures, in which

Fig. 1 illustrates an example of an apparatus;

Figs. 2a-2c illustrate I-Q-diagrams of examples of an IQ representation of a received radar signal;

Fig. 3a and Fig. 3b illustrate I-Q-diagrams of examples of a center estimation for an IQ representation of a received radar signal;

Fig. 4 illustrates an I-Q-diagram of an example of a logarithmic spiral function fitted to an IQ representation of a received radar signal;

Fig. 5 illustrates an I-Q-diagram of an example of a generic spiral function fitted to an IQ representation of a received radar signal;

Fig. 6 illustrates an I-Q-diagram of an example of clusters of an IQ representation of a received radar signal, generated by manifold learning;

Fig. 7 illustrates an I-Q-diagram of an example of segments of circles fitted to respective parts of an IQ representation of a received radar signal;

Fig. 8 illustrates an I-Q-diagram of an example of a polynomial function fitted to an IQ representation of a received radar signal;

Fig. 9 illustrates an example of a radar system; and

Fig. 10 illustrates an example of a method.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

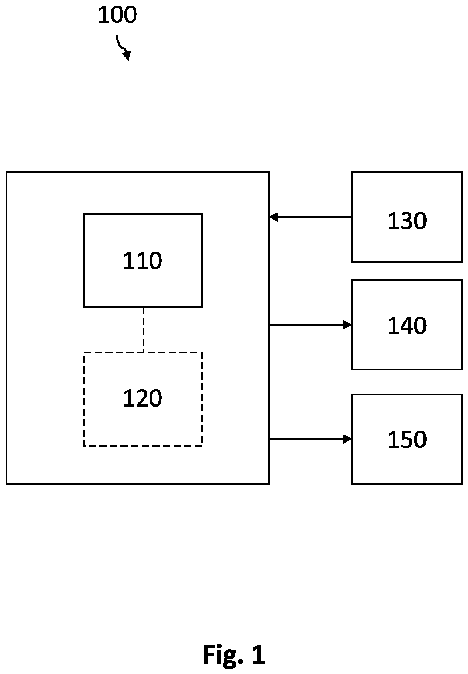

**Fig. 1** illustrates an example of an apparatus 100. The apparatus 100 comprises processing circuitry 110 and optionally interface circuitry 120. In case interface circuitry 120 is present, the interface circuitry 120 may be communicatively coupled (e.g., via a wired or wireless connection) to the processing circuitry 110, e.g., for data exchange between the interface circuitry 120 and the processing circuitry 110.

The interface circuitry 120 may be any device or means for communicating or exchanging data. For instance, the interface circuitry 120 may be a set of electronic components, circuits, and/or subsystems for interaction between different interfacing entities such as devices, systems, or components. It may comprise voltage level shifters, buffers, amplifiers, filters, converters, multiplexers, demultiplexers, and/or various other electronic elements.

The processing circuitry 110 may be, e.g., a single dedicated processor, a single shared processor, or a plurality of individual processors, some of which or all of which may be shared, a digital signal processor (DSP) hardware, an application specific integrated circuit (ASIC), a microcontroller or a field programmable gate array (FPGA). The processing circuitry 110 may optionally be coupled to, e.g., read only memory (ROM) for storing software, random access memory (RAM) and/or non-volatile memory.

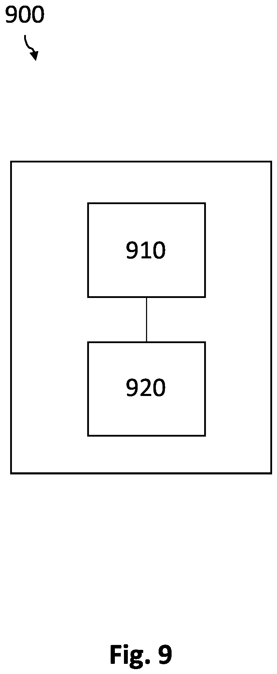

The apparatus 100 is to be considered in the context of a radar sensor. For example, the apparatus 100 may be partially or fully integrated into the radar sensor. Alternatively, the apparatus 100 may be external to the radar sensor. This is explained with reference to the radar system and the Fig. 9 below.

The radar sensor may be any type of radar sensor, e.g., a Doppler radar sensor, a Continuous Wave radar sensor or alike. In some examples, the radar sensor may be a Frequency-Modulated Continuous Wave (FMCW) radar sensor. The radar sensor is configured to emit a radar signal and receive a reflection (echo) of said radar signal, yielding a received radar signal. The radar sensor may acquire radar data, e.g., by IQ or complex sampling of the received radar signal (e.g., a baseband signal). Alternatively, the radar sensor may acquire real-valued radar data and perform a fast Fourier transform (FFT) or discrete Fourier transform (DFT) across the fast time of the radar data, yielding a complex IQ representation of the range spectrum. For instance, for a Doppler or a CW (continuous wave) radar, complex raw data may be acquired, and the radar data may directly exhibit a spiral shape. For FMCW however, the raw data do not necessarily have to be complex, i.e., the received radar signal may be sampled without a Q channel. In such cases, the IQ representation may be generated through applying a complex DFT or FFT to a range bin of the radar data. Optionally, the received radar signal may be downconverted to an intermediate frequency, and the downconverted signal may then be sampled.

The IQ sampling, i.e., In-phase and Quadrature-phase sampling, is a demodulation technique used to capture the received radar signal as a complex signal to maintain phase information. The received radar signal is represented as two separate streams of radar data: one for the in-phase (I) component and one for the quadrature-phase (Q) component. IQ sampling involves sampling (digitizing) of the in-phase (I) and of the quadrature-phase (Q) components of the received radar signal, e.g., by two synchronized analog-to-digital converters (ADCs). The I and Q components may be sampled with a specific phase shift between each other, e.g., a 90° phase shift. For example, one path of the demodulation may be carried out with an original phase position, resulting in I data, the second path may be carried out with a reference frequency phase-shifted by 90°, resulting in Q data. Each data point of the I data is associated with a respective Q data, yielding IQ data.

The processing circuitry 110 is configured to obtain the IQ representation 130 of the radar data. The IQ representation 130 of the radar data may be the above IQ data in its raw form or data derived thereof, e.g., in the latter case, the IQ representation 130 may indicate complex (e.g., micro-) Doppler data at a target range bin derived from the IQ data. Ranges or range bins may be derived from the raw data by using Fourier transforms and binning, for instance.

The interface circuitry 120 may receive the IQ representation 130, e.g., from the radar sensor. Alternatively, the processing circuitry 110 may derive the IQ representation 130 from the radar data, e.g., by associating the data points of the I data with the Q data based on their time relation or deriving the ranges or range bins from the raw data. The IQ representation 130 represents data points in an IQ plane, i.e., with coordinates described by an I axis and a Q axis. The IQ representation 130 may comprise multiple (complex) data points or samples of the radar data or data derived thereof, each sample indicating a respective I and Q value of the radar receive signal for a certain point in time.

For an ideal continuous sine-wave shaped radar signal, the data points of the IQ representation 130 would be arranged along a circle around the origin of the IQ coordinate system. This is due to the IQ representation 130 indicating a phasor of the received radar signal, i.e., projecting the time-dependent radar signal to the time-independent IQ coordinate system.

However, the IQ representation 130 may be subject to IQ imbalances (e.g., for a Doppler or CW radar sensor). IQ imbalances refer to imperfections or discrepancies between the I and the Q components of the complex radar signal, i.e., the I and Q components are misaligned. IQ imbalances may occur due to hardware imperfections of the antennas of the radar sensor receiving the radar signal, misalignments between the I and Q channel or other non-idealities. These IQ imbalances distort the radar data and thus corrupt the signal extraction.

IQ imbalances may conventionally be classified as amplitude imbalance, phase imbalance and offset, which shift the data points with respect to the origin of the IQ coordinate system, compress the IQ data points to an ellipse, introduce asymmetries or rotate the ellipse with respect to its center (central point).

In case of an FMCW radar sensor, there may be distortions due to the radar scene, e.g., in case of a static target in the same range bin of radar data of an FMCW radar sensor. These mainly may cause an offset in the IQ representation.

In the present case, the IQ representation 130 may exhibit more complex distortions: the IQ representation 130 may have or approximately have a spiral shape. That is, the data points of the IQ representation 130 are arranged or approximately arranged along a spiral-like formation. The spiral shape may be a coil, helix, or a winding curve that extends outward or inward with respect to a central point (or axis). The IQ representation 130 may thus exhibit a discontinuity, viz. between a starting point (e.g., an innermost point or an inside end) and an end point (e.g., an outermost point or an outside end) of a winding of the spiral shape. Hence, the IQ representation 130 is not sufficiently represented by a circle or ellipse since it has a non-closed shape. For example, the starting point of the winding may be further away from the end point than to other data points along the winding. The spiral shape may arise, e.g., if the measured (received) radar signal - instead of winding like a corkscrew - increases/decreases its amplitude over time and reverses its direction at a certain point in time. That is, the power of the received radar signal may decline and increase with increasing and decreasing distance between antenna and target, respectively.

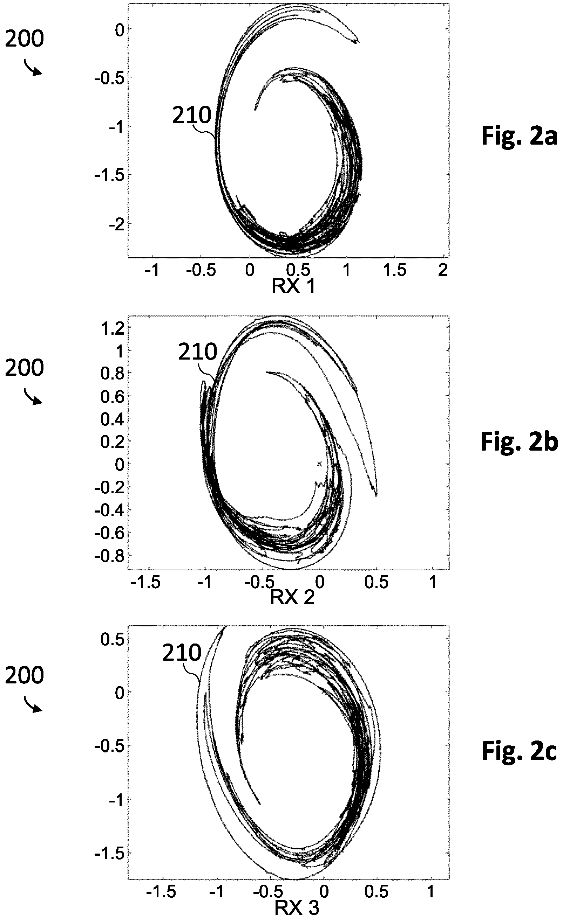

Examples of an IQ representation 130 of radar data is illustrated by Figs. 2a-2c. **Figs. 2a-2c** show I-Q-diagrams 200 of examples of IQ representations 210 (here: raw IQ data) for three respective receiving channels (RX 1, RX 2 and RX 3) of a radar sensor. Each IQ representation 210 is illustrated by a curve connecting data points of the IQ representation 210 with each other by its time order. The IQ representations 210 in Figs. 2a-2c have approximately a spiral shape with one spiral arm which extends over one complete winding. A winding may be formed by a pitch or angular separation between different contiguous parts of a spiral. Depending on the spiral model, a winding may be defined differently. For example, contiguous data points extending over an angle of 360° viewed from a center of the spiral may correspond to one winding.

The curves are arranged along the spiral shape and follow the spiral arm several times back and forth. The adjacent "rounds" of the curve in which the spiral arm is traced partly differ in their extensions along the spiral arm. The spiral shape of the examples of IQ representations 210 of Figs. 2a-2c is elongated, i.e., the radius of the spiral arm does not increase continuously starting from a starting point of the spiral but rather evolves elliptically. The IQ representations 210 of Fig. 2a-2c differ from each other in their orientation, e.g., the IQ representation 210 of Fig. 2c is rotated relative to the IQ representations 210 of Figs. 2a and 2b, in their elongation, starting and end point, the spread between the rounds of the curve, etc. In other examples than the ones shown in Figs. 2a-2c, the IQ representation may have any other spiral shape, e.g., have more windings (turns) or only one partial winding, more spiral arms, another orientation or alike.

For (e.g., very or ultra) near-field measurements, such complex distortions may occur due to (e.g., non-linear) near-field effects and/or high amplitude changes relative to the short displacements of the target. A near-field measurement may be a measurement of the radar sensor in its near-field, e.g., a measurement with a distance between the emitting and/or receiving antenna of the radar sensor and an object in the field of view of the radar sensor of one wavelength of the radiation (of the radar signal) or less. Thus, the radar sensor may be configured to emit the radar signal to its near-field and receive the reflection of said radar signal from the near-field, yielding the received radar signal. The radar data may, for instance, indicate such a near-field measurement.

A spiral shape may occur if the signal amplitude considerably decreases for target displacements of half the wavelength (lambda) of the radiation of the radar sensor. This may be the case if the target is close to the radar senor relative to the frequency of the signal. A near-field measurement may additionally increase the effect of a spiral shaped IQ representation. Further, a low reflective target or object may cause or amplify a spiral shape in the radar data. The radar data may, in such cases, indicate a near-field measurement of a moving object, e.g., moving with an amplitude of (about) half the wavelength of the radiation or less, and/or of a low reflective object. A spiral shape may be observed in data points that are gathered for a target movement along lambda/2, as this is the displacement for one winding or one (unit) circle in an ideal measurement (in the far field). For shorter displacements, the winding will not be fully covered; larger displacements may cause more windings of the spiral. The radar data may, alternatively, indicate any other measurement causing a spiral shape of the IQ representation 130.

The processing circuitry 110 is configured to determine an approximation 140 of the IQ representation 130. The approximation 140 has a spiral configuration (characteristic, i.e. generally spiral shape). That is, the processing circuitry 110 may determine the approximation 140 such that it has the said spiral configuration. The processing circuitry 110 may approximate the IQ representation 130 in the IQ dimension (plane), yielding the approximation 140. The approximation 140 may thus comprise I and Q values or data points in I and Q coordinates. The processing circuitry 110 may determine the approximation 140 for, e.g., an entirety of (e.g., a frame) of the IQ representation 130. The approximation 140 may, in some examples, exclude an approximation of the received radar signal itself or of the baseband signal or an approximation of phase values of the received radar signal.

The approximation 140 may be a simplification, estimation, idealization, fitting or modified version of the IQ representation 130 which preserves essential characteristics of the IQ representation 130 in the form of the spiral configuration. The processing circuitry 110 may determine the approximation 140 to minimize or decrease a distance between the approximation 140 or its data points and the data points of the IQ representation 130. The spiral configuration of the approximation 140 may mean that the approximation 140 has or indicates a spiral shape (e.g., in a mathematical sense), approximates a spiral shape or makes in other ways use of characteristics of the spiral shape of the IQ representation 130: The approximation 140 may, for example, be based on a mathematical model or function of a spiral shape.

The processing circuitry 110 is further configured to determine a phase 150 of the received radar signal based on the approximation 140. The phase 150 may, thus, be derived from the approximation 140. The phase 150 may be an angular phase or phase angle of the received radar signal. The phase 150 may indicate or quantify an angular displacement or difference in phase between two points of the approximation 140 in the IQ plane and may be indicative for the corresponding phase of the IQ representation 130. The phase 150 may therefore be relevant for further radar processing, such as object detection, motion detection or alike. The processing circuitry 110 may determine the phase 150 using any phase analysis technique. Examples of how the phase 150 may be extracted are described further below.

Due to the distorted signal, it may be inaccurate or cause high computational efforts to derive the phase 150 directly from the IQ representation 130 itself. Conventional calibration methods may fail to balance spiral-like distortions. By contrast, the apparatus 100 may - instead of a conventional complex signal representation of a circle or an ellipse in the target range bin - compensate the distortion by generating the approximation 140 taking into account the spiral shape of the IQ representation 130.

Examples of how the approximation 140 may be determined are at least one of a fitting of a spiral function to the IQ representation 130, manifold learning, a matching of segments of circles and/or ellipses to respective parts of the IQ representation 130 and a polynomial approximation. In the following, these examples are described in further detail: The approximation 140 may, for instance, be based on a mathematical function (spiral function) describing or reconstructing a spiral shape. The approximation 140 may then be determined through fitting the spiral function to the IQ representation 130. For example, a spiral shape may be described mathematically using a parametric equation that defines a point of a spiral as a function of one or more parameter (the spiral function). Certain assumptions may be made about the type of spiral shape that the IQ representation 130 exhibits for selecting a spiral function. For example, the spiral shape may be approximated using a spiral function of an Archimedean spiral, a Fermat's spiral, a hyperbolic spiral, a logarithmic spiral or alike.

For example, for a logarithmic spiral (also equiangular spiral), the distance from a central point of the spiral is assumed to grow exponentially as the angle increases. For a logarithmic spiral being the basis for the spiral function, Equation 1 may be used as an example of a spiral function:

$$r(\phi) = a\, e^{k\phi}$$

Equation 1, where r is the radius of the spiral in dependence of the angle $\varphi$, and a is a parameter determining the initial distance from the central point, and k is a parameter affecting the rate at which the spiral expands. A cartesian format of Equation 1 may be likewise used as the spiral function.

As an alternative to a specific spiral function, a generic spiral function may be used. That is, the spiral shape may be modelled by a cosine and a sine function for its I and Q coordinates, respectively. The cosine and sine function may be functions of an angle of the spiral. One or more parameters may be used to create a pre-factor of the cosine and/or sine function. Additionally or alternatively, one or more parameters may be used within the argument of the cosine or sine function. One or more of the parameters used for the sine and cosine function may correspond to each other or differ from each other. In the latter case, the approximation 140 may have more flexibility to create more intricate and diverse patterns of a spiral shape. For instance, different functions used for the I and Q coordinates and/or different combinations of parameters for the I and Q coordinates may allow controlling the I and Q coordinates independently. The number of parameters used may be adjusted to the desired approximation accuracy and the available computing resources.

An example of such a generic spiral function is described by Equation 2:

$$s(\phi, p) = (p_1 \cdot (\phi + p_2)^{p_3} \cdot cos(\phi + p_4)) / p_5 + p_6 + j (p_7 \cdot (\phi + p_8)^{p_9} \cdot sin(\phi + p_{10})) / p_{11} + p_{12})$$

Equation 2, where s is a complex-valued point (I and Q valued point) of the spiral on the IQ plane, $p_1$ to $p_{12}$ are parameters of the spiral function, $\phi$ is the angle with respect to a central point of the spiral, the first term of Equation 2 right of the equal sign and from $p_1$ until $p_6$ refers to the I value, the second term of Equation 2 right of the equal sign from $p_7$ to $p_{12}$ refers to the Q value. The parameters $p_1$ to $p_{12}$ may control, independently for the I and the Q dimension, the spiral's growth rate, the scaling of the oscillating radius of the spiral and the offset of the spiral.

The above-mentioned fitting of the spiral function to the IQ representation 130 may then be performed based on any fitting method. For parametric spiral functions, fitting the spiral function to the IQ representation 130 may comprise finding the parameters which fit the resulting spiral to the IQ representation 130. The parameter determination may be solved using an optimization method for decreasing an error between the resulting spiral and the IQ representation 130. For example, a regression method, a trained machine-learning model or alike may be used as fitting methods.

In some examples, the approximation 140 is determined through using a least-squares (LS) method. The LS method may be a specific type of a regression method used to estimate the parameters of a regression model (e.g., a spiral function as mentioned above) by decreasing (or minimizing) the sum of the squared differences between the observed values (the IQ representation 130) and predicted values (the approximation 140). Using an LS method may be advantageous to achieve robust results with high efficiency. A fitting method, such as the LS method, may be likewise applied to other examples of the approximation 140, as explained further below.

The fitting method may, in some cases, benefit from an optional initialization of the approximation 140, e.g., an initialization may reduce the processing time. In the case of a spiral function, the parameters of the selected spiral function may be initialized. An initialization may, for instance, be based on specific reference coordinates of one or more points or reference characteristics of the spiral shape. For example, the initialization may be based on a position of a center (or central point, origin) of the spiral shape of the IQ representation 130 in the IQ plane. The processing circuitry 110 may in such cases estimate the center of the spiral shape and determine the approximation 140 based on the estimated center. The initialization may be likewise performed for a reference length of the spiral, a number of windings, direction of rotation or alike. An estimation of the center may additionally or alternatively be used for the determination of the phase 150, as explained further below. The center may be considered an IQ offset of the IQ representation 130.

The center may be estimated by any estimation technique. For instance, the distribution of data points of the IQ representation 130 may be analyzed using, e.g., a method of moments, a method of maximum likelihood, a radial profile analysis, etc. High accuracy and low computational effort may be achieved with an ellipse fitting method or a circle fitting method. For example, the processing circuitry 110 may estimate the center through applying such an ellipse fitting method or circle fitting method to the IQ representation 130.

Ellipse fitting and circle fitting methods are techniques that can be used to estimate the parameters of ellipses and circles, respectively, that fit, sufficiently approximate or best match the data points of the IQ representation 130. Ellipse fitting and circle fitting may involve decreasing or minimizing the error between the data points and an ellipse's or circle's equation. This error may be measured as the sum of squared differences (least squares) between the observed data points and the points on the fitted ellipse. Ellipse fitting may include LS fitting, RANSAC (Random Sample Consensus) or Direct Ellipse Fitting, or others. Circle fitting may include LS fitting, a Kasa method or a Taubin method, or others. The result of the ellipse fitting or the circle fitting is an ellipse or a circle fitted to the data points, respectively. A center of the ellipse or the circle may then be determined as estimation of a center of the spiral.

For example, an LS fitting of an ellipse or circle may be performed based on an optimization of the (spiral) center using "fminsearch". fminsearch is a function used for unconstrained non-linear optimization to find a minimum of a defined objective (cost) function. The cost function is in this case the LS error. The function of fminsearch may be based on the Nelder-Mead simplex method which is a direct search optimization algorithm. It may be in particular advantageous for finding a spiral center of an IQ representation 130 since the resulting cost function does not necessarily have to be smooth or differentiable. fminsearch may include starting from an initial guess of the spiral center, iteratively exploring the parameter space, e.g., by forming a simplex (a geometric shape in N-dimensional space) around the initial guess, evaluating the objective function at specific points within the simplex and updating the simplex based on the evaluations. The fminsearch algorithm may continue to iteratively refine the simplex until convergence criteria are met.

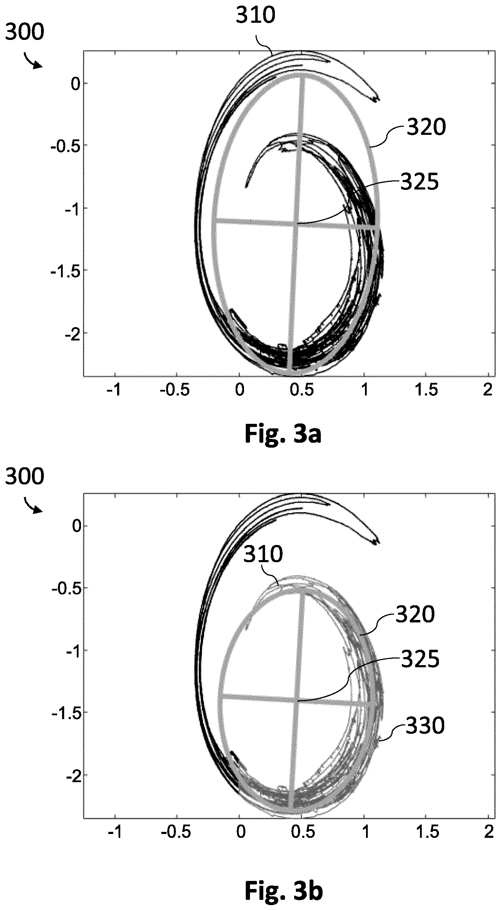

The accuracy of the ellipse fitting or circle fitting may be improved by applying it to a predefined winding of the spiral shape or part thereof - i.e., data points of other windings (and optionally, some data points of the predefined winding) may be excluded. For instance, the ellipse fitting method or the circle fitting method may be applied to an innermost winding of the spiral shape or part thereof. Data points of the IQ representation 130 not belonging to this predefined winding may be discarded. Thus, the ellipse or circle fitting may exclusively be applied to data points belonging to the predefined winding (partial data). This is illustrated by Fig. 3a and Fig. 3b. **Fig. 3a** and **Fig. 3b** show I-Q-diagrams 300 of examples of ellipses 320 fitted to an example of an IQ representation 310. The IQ representation 310 corresponds to the IQ representation 210 of Fig. 2a. The ellipses 320 have a center 325 which may be assumed as estimated center of a spiral shape of the IQ representation 310. The ellipse 320 of Fig. 3a is fitted to the complete data of the IQ representation 310, whereas the ellipse 320 of Fig. 3b is exclusively fitted to partial data 330 of the IQ representation 310. The partial data 330 solely includes data points belonging to an innermost winding (turn) of a spiral arm of the spiral shape. Such an ellipse fitting to partial data 330 may achieve more accurate results in reconstructing the spiral shape in subsequent approximation techniques.

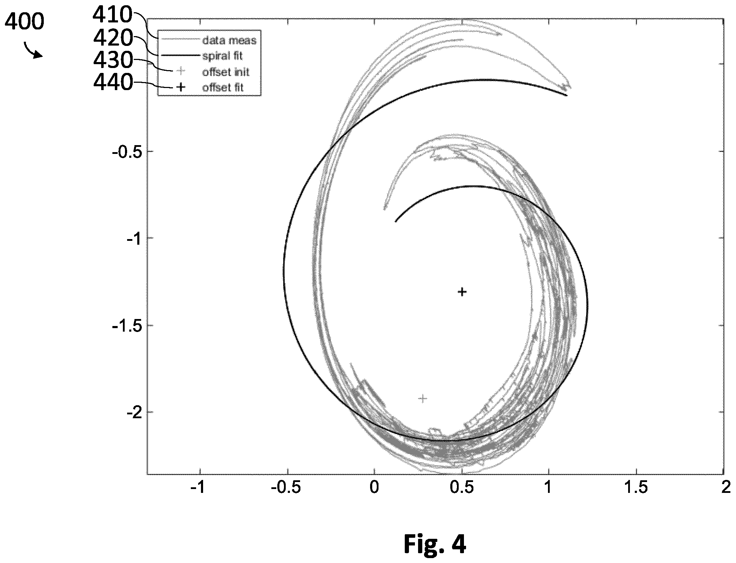

An example of a logarithmic spiral function fitted to the IQ representation 210 of Fig. 2a is shown in Fig. 4. **Fig. 4** shows an I-Q-diagram 400 of an example of an IQ representation 410 (corresponding to the IQ representation 210). The I-Q-diagram 400 further comprises an approximation 420 resulting from a logarithmic spiral function fitted to the IQ representation 410. The fitting of Fig. 4 has been initialized with an initial offset 430 assumed as the spiral center. After performance of the fitting, i.e., after at least one iteration of modifying parameters of the spiral function in order to decrease an error between the curve 420 and the IQ representation 410, the spiral center is set to a fitted or resulting offset 440.

The fitting of a logarithmic spiral function to the IQ representation 130, such as illustrated by Fig. 4, may achieve a very low runtime due to its simplicity. Additionally, the estimated spiral may be substantially independent from an initialization, such as an initialization with an IQ offset.

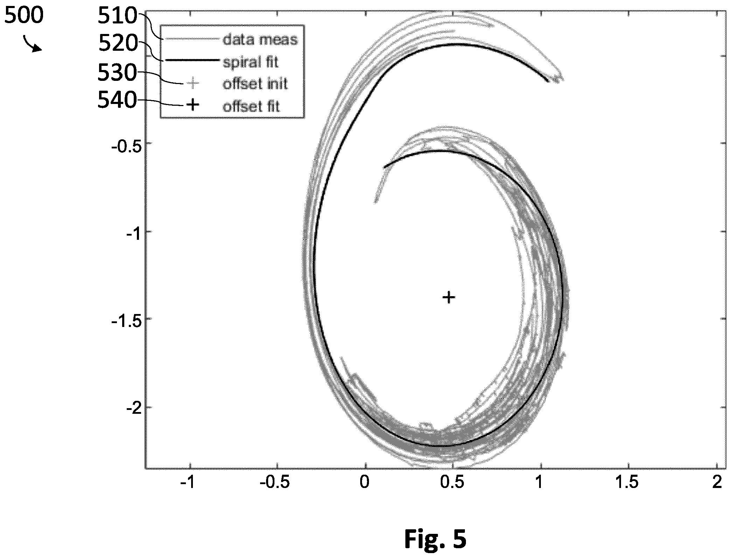

An example of a generic spiral function fitted to the IQ representation 210 of Fig. 2a is illustrated by Fig. 5. **Fig. 5** shows an I-Q-diagram 500 of an example of an IQ representation 510 (corresponding to the IQ representation 210). The I-Q-diagram 500 further comprises an approximation 520 resulting from a generic spiral function fitted to the IQ representation 510. The fitting of Fig. 5 has been initialized with an initial offset 530 (equal to fitted offset 540) assumed as the spiral center.

The fitting of a generic spiral function to the IQ representation 130, such as illustrated by Fig. 5, may increase an accuracy of the approximation 140, i.e., have a lower error in representing the IQ representation 130 relative to a logarithmic spiral function. It may however have a longer runtime and a higher dependency on a well-guessed initialization value (e.g., a spiral center) compared to a logarithmic spiral function.

Apart from using a spiral function, manifold learning may be used. The processing circuitry 110 may, for instance, determine the approximation 140 through applying manifold learning to the IQ representation 130.

Manifold learning is a dimensionality reduction technique used in machine learning. It may be based on discovering an underlying structure or geometry of the higher-dimensional data of the IQ representation 130 in lower-dimensional space, i.e., it may be based on the assumption that the higher-dimensional data lies on or near a lower-dimensional manifold embedded within the high-dimensional space. This manifold may be assumed to be smooth, continuous, and/or connected, resembling the geometric shape of a spiral structure (shape). Manifold learning techniques may aim to project the IQ representation 130 data onto a lower-dimensional space while preserving essential geometric properties and relationships between data points. Manifold learning may increase the accuracy of the approximation 140, particularly when the IQ representation 130 has nonlinear relationships between data points.

The manifold learning algorithm may be configured to find clusters of contiguous data points in the IQ representation 130. For instance, it may include searching a one-dimensional data ordering of the IQ representation 130 by investigating data clusters and finding nearest neighbors. The clusters or a compressed version thereof may be the approximation 140.

Any manifold learning algorithm may be applied, such as Isomap (manifold learning), Locally Linear Embedding (LLE), Multi-dimensional Scaling (MDS), autoencoders or alike. Isomap (Isometric Feature Mapping) may be beneficial for capturing the intrinsic structure of the data since it is based on geodesic distances (shortest path distances) between data points of the IQ representation 130. Thus, Isomap is a nonlinear dimensionality reduction method that preserves the pairwise geodesic distances (shortest path distances) between data points in the original high-dimensional space of the IQ representation 130 while projecting the data onto a lower-dimensional space.

Isomap may include constructing a pairwise distance matrix that captures the Euclidean distances between data points in the high-dimensional space of the IQ representation 130. Isomap may further include constructing a neighborhood graph, where the data points are connected to their nearest neighbors in the high-dimensional space, e.g., to their k nearest neighbor where k is a parameter determining the level of local versus global information retained in the feature mapping. Isomap may then compute the geodesic distances between data points on the neighborhood graph. These geodesic distances represent the shortest path distances along the edges of the graph and capture the intrinsic structure of the data, even when it is nonlinear. Isomap may use multidimensional scaling (MDS) on the geodesic distance matrix to find a lower-dimensional representation of the IQ representation 130 that best preserves these distances. The result of Isomap may be a lower-dimensional feature mapping of the data points, where the data points are represented in the reduced space. This lower-dimensional representation or data derived thereof may be the approximation 140.

To improve the clustering with Isomap manifold learning, a phase evaluation may be performed, e.g., by a polynomial fitting of the IQ representation 130 to a manifold parameter of the manifold learning. The manifold parameter may be at least on of a distance metric (e.g., Euclidean distance or another metric) to compute pairwise distances between data points and a number of dimensions in the lower-dimensional representation produced by the manifold learning algorithm. Additionally or alternatively, the clustering of the Isomap manifold learning may be improved by considering the time dependency between data points of the IQ representation 130.

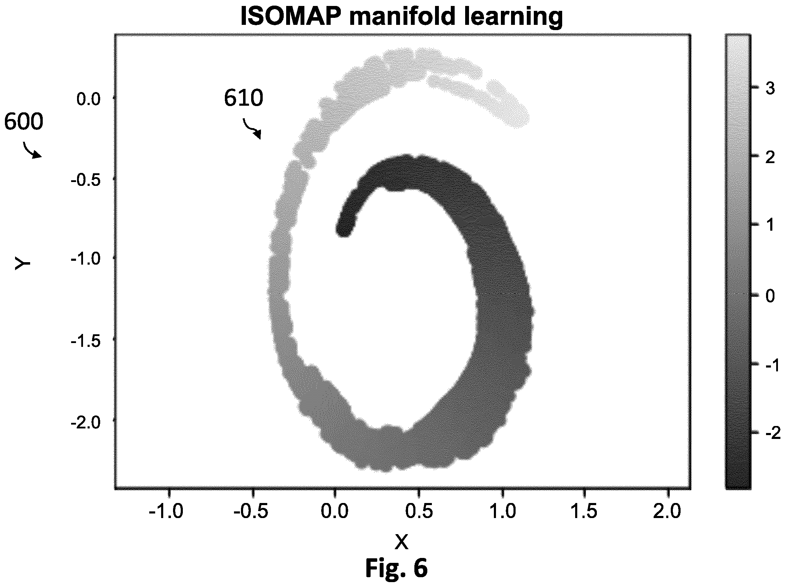

An example of a clustering of the IQ representation 210 of Fig. 2a, produced by Isomap manifold learning, is illustrated by Fig. 6. **Fig. 6** shows an I-Q-diagram 600 of an example of clusters 610 of the IQ representation 210. The clusters 610 are depicted by a greyscale, i.e., data points within one cluster have the same gray level, in Fig. 6.

Some approximation techniques, e.g., manifold learning, segmental fit or polynomial approximation, may benefit from an optional upstream compression of the IQ representation 130. The compression may reduce the computational effort of determining the approximation 140. Especially LS fits may be negatively impacted by spread data clusters. As indicated with reference to Figs. 2a-2c, the distribution of the data points of IQ representation 130 may exhibit a certain statistical dispersion (variability, scatter, spread), i.e., a certain deviation between the repetitions (rounds) of a path along a spiral arm traversed by the data points. A compression may enable an initial simplification of the IQ representation 130 which may then be used to determine the approximation 140. Compression refers to the process of reducing the size or volume of the IQ representation 130 while retaining relevant geometric information. Any compression technique may be used, e.g., elimination of redundancy (i.e., only taking into account one (representative) round or fewer rounds of the data points along a spiral arm, while discarding data points of other rounds) or encoding the IQ representation 130 (i.e., determining one representative round of data points along the spiral arm).

An example of a compression may be based on an estimated provisional phase of the received radar signal. The processing circuitry 110 may, for instance, estimate said provisional phase based on the IQ representation 130, compress the IQ representation 130 with respect to the provisional phase and determining the approximation 140 for the compressed IQ representation. For example, an estimated spiral center may be used for the compression. Thus, the compression may be based on the estimated (provisional) phase with respect to this spiral center. The provisional phase may be derived e.g., from an ellipse fitting or circle fitting method, as described above.

In cases where the (initial) spiral center is estimated using ellipse or circle fitting, the resulting ellipse or circle may be optionally offset-removed and then be re-used for estimating the provisional phase. The phase of an ellipse or a circle may be estimated by determining an angular position of a point on the ellipse or circle with respect to an axis, e.g., a symmetry axis. The phase may indicate how far around the ellipse or circle a data point has traveled from a reference point, e.g., the ellipse's or circle's foci or the point where the major and minor axes of an ellipse intersect. After offset removal, the phase value of each data point of the ellipse or circle may be used as the provisional phase.

The compression may be performed by associating data points of the IQ representation 130 to respective provisional phases. The data points may be clustered based on said association. Then, at least one compressed data point may be determined for each cluster, e.g., based on a statistical processing of the data points of each cluster. For example, a mean or median of the data points of a cluster or alike may be determined and set as new compressed data point or a data point nearest to the mean or median may be chosen to be the (representative) compressed data point. Alternatively, the compression may comprise selecting any other kind of representative data point for respective provisional phase values and leaving out the rest of the data points. In this manner, a compression may be performed which preserves the original phases of the data points.

Alternatively, e.g., in cases where no initial spiral center is estimated or where a less complex compression is aimed at, a compression may be performed by using every $z \geq 2$ data point of the IQ representation 130 and disregarding the remaining data points. For example, such a compression may be advantageous for Isomap manifold learning as this technique does not necessarily rely on an initial spiral center approximation.

The approximation 140 may alternatively or additionally be determined by a segmental fit. For example, the processing circuitry 110 may match respective segments of multiple circles or ellipses to respective parts of the IQ representation 130. The segments may jointly reproduce a spiral configuration (or spiral shape) fitted to the IQ representation 130. For instance, the (e.g., compressed) data points may be grouped into parts or segments approximating a spiral shape. For example, the parts of segments may be selected by a predefined angle coverage along the (approximated) spiral shape. An ellipse or circle fitting may then be applied to each of the segments of the spiral shape. The result of the fitting algorithm may be segments of circles or ellipses which are fitted (matched) to the segments of the spiral shape. The accuracy and complexity of determining the approximation 140 in case of a segmental fit may depend on the number of segments to reconstruct the spiral shape.

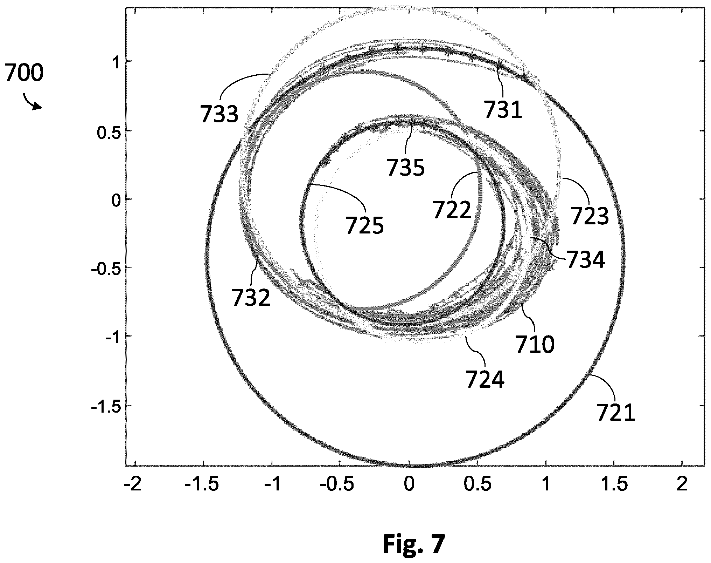

An example of a segmental fitting of circles to the IQ representation 210 of Fig. 2a is illustrated by Fig. 7. **Fig. 7** shows an I-Q-diagram 700 of an example of an IQ representation 710 (corresponding to the IQ representation 210). The I-Q-diagram 700 further comprises an approximation resulting from matching segments of five circles 721 to 725 to respective parts of a compressed version of the IQ representation 710. The compressed IQ representation is indicated by specific compressed data points, e.g., data points 731-735. For example, compressed data point 731 belongs to a first part of the compressed IQ representation to which a segment of a first circle 721 is fitted, compressed data point 732 belongs to a second, different part of the compressed IQ representation to which a segment of a second different circle 722 is fitted, and so on.

Another example of how the approximation 140 may be determined is a polynomial approach. The processing circuitry 110 may, for instance, determine the approximation 140 through determining a polynomial approximation of the spiral shape for the IQ representation 130. The (e.g., two-dimensional) polynomial approximation (polynomial fit or polynomial regression) may be based on a mathematical technique of curve fitting. Determining the polynomial approximation may involve fitting a polynomial equation to the IQ representation 130.

A general form of a polynomial equation is $y = a_0 + a_1 x + a_2 x^2 + a_3 x^3 + ... + a_n x^n$, where y is a dependent variable and represents a Q value (or an I value), x is an independent variable and represents a linear example vector. I and Q values may thus be fitted individually. $a_0, a_1, a_2, ..., a_n$ are the coefficients of the polynomial equation. These coefficients are determined through the fitting process and represent the relationship between I and Q values which describe data points of the approximation 140. The goodness of the fit may depend on the selected degree (n) of the polynomial equation. The degree determines the highest power of x in the polynomial equation. For example, a linear fit uses n = 1, a quadratic fit uses n = 2, and so on. The degree may be selected, e.g., heuristically, by validation of the fitting or based on domain-specific assumptions. Generally, an $n_{th}$-order polynomial may be used to fit the time series Q(t) and I(t) to correct the phases by evaluating the polynomial fit.

Any fitting method, as described above, may be used to fit the polynomial equation to the IQ representation 130 or the compressed version thereof. For example, LS fit may be used to find the coefficients ($a_0, a_1, a_2, ..., a_n$) that sufficiently decrease or minimize the difference between the predicted values of y and the actual data points of the IQ representation 130. This process may involve solving a system of equations. The polynomial approach may be both accurate and low in computational effort compared to other approximation techniques described herein.

A specific example of the polynomial approach may include the following steps: using ellipse fit for an initial IQ offset estimation (center estimation), compressing the IQ representation 130 based on an estimated provisional phase with respect to the ellipse center and fitting a polynomial equation to the compressed IQ representation.

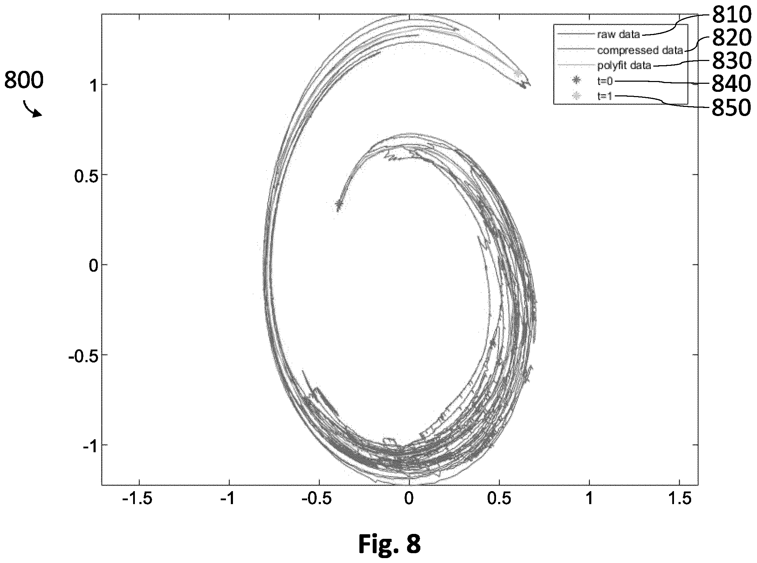

The polynomial fitting is illustrated by Fig. 8. **Fig. 8** shows an I-Q-diagram 800 of an example of an IQ representation 810 (corresponding to the IQ representation 210). The I-Q-diagram 800 further comprises a compression 820 of the IQ representation 810 and an approximation 830 of the compression 820 resulting from fitting a polynomial equation to the compression 820. The approximation 830 may have a starting data point 840 and an ending data point 850.

The phase 150 is derived from the approximation 140 determined by any of the techniques described above. The phase 150 may correspond to an angle viewed from reference point. This reference point may, for instance, be a center of the spiral shape approximated by the approximation 140. A center estimation technique, as described above, may therefore be applied to the approximation 140. If the center has already been estimated as initialization of the approximation process, this estimated center may be re-used as reference point for the phase determination.

The phase determination may be applied to the approximation 140 directly or to the original IQ representation 130 mapped to the approximation 140. In the latter case, the processing circuitry 110 may optionally map data points of the IQ representation 130 to data points of the approximation 140 and determine the phase 150 of the received radar signal based on the mapped data points. The mapping of data points may associate the original data points to the corresponding approximated data points. The mapping may be preferably done such that the phase 150 of the original data points is substantially maintained.

For example, LS fit may be used to find an association between the original and the approximated data points. LS fit may optionally be used in combination with "fmincon". fmincon (function minimization with constraints) is a function for solving a nonlinear constrained optimization problem. fmincon includes decreasing or minimizing an error, here with LS fit, between a phase of an original data point and a phase of an approximated data point.

Another example of a mapping technique may be the usage of an estimated provisional phase from ellipse or circle fitting, as described above in relation to the compression techniques. Thus, the original data points with a provisional phase matching or approximating a phase of data points of the approximation 140 may be mapped onto said data points of the approximation 140. This may be faster and provide a higher performance than a common LS fit. It is to be noted that the mapping may alternatively be performed by external circuitry: In such a case, the apparatus 100 may receive the mapping (e.g., via the interface circuitry 120) from said external circuitry.

Any technique may be used to determine the phase 150, this may, for instance, depend on the specific method chosen for determining the approximation 140. Two specific examples of a phase determination technique may be arc-tangent demodulation and phase linearization. In the former case, the processing circuitry 110 may determine the phase 150 through applying an arc-tangent (inverse tangent) demodulation to the approximation 140 or to the data points mapped to the approximation 140. For applying said arc-tangent demodulation, an arc-tangent of the ratio of the Q value (component) to the I value of the approximation may be determined, for instance. The phase 150 may then be determined based on the value of the arc-tangent, e.g., a value of the phase 150 may correspond to the value of the arc-tangent. The arc-tangent demodulation may particularly achieve a high accuracy in the phase determination.

In case of phase linearization, the processing circuitry 110 may determine the phase through linearizing the phase 150 with respect to an arc length of the approximation 140 or the mapped data points. In other words, the arc length may be determined for the approximation 140, e.g., for the polynomial approximation of the spiral shape, and the arc length may be linearized based on a predefined relation between length and phase. This relation may be guessed and optionally corrected, or directly derived from an estimated provisional phase from ellipse or circle fitting or from a phase fitted (e.g., LS fitted) to the arc length function used for the linearization.

The phase evaluation may optionally be performed with an IQ offset removed version of the approximation 140 or mapped data points. The IQ offset may be estimated by using a center estimation technique, as described above.

Optionally, the apparatus 100 may perform further processing of the determined phase 150. For instance, the processing circuitry 110 may determine a motion of a target based on the determined phase 150. The processing circuitry 110 may determine, e.g., an oscillation of lambda/2 or less in a near-field of the radar sensor. The processing circuitry 110 may alternatively determine any motion of any amplitude in a near-field of the radar sensor. The motion may, for instance, comprise or be a motion of a blood vessel of a living being. The processing circuitry 110 may in such cases further determine a blood pressure of the living being based on the determined phase 150 (and/or based on the motion).

Such target displacements in the (e.g., very/ultra) near field of the radar sensor (e.g., an FMCW radar sensor) when measuring the pulsations of the arteries below the skin surface with a radar sensor attached directly on or shortly above the skin surface may be highly distorted due to near field effects. Instead of a conventional approximation of a circle or an ellipse in the target range bin for a target displacement of lambda/2, the apparatus 100 may rather approximate a spiral shape. Based on this approximation 140, the apparatus 100 may enable a projection of the data points of the IQ representation 130 onto a unit circle to achieve a more accurate displacement measurement.

**Fig. 9** illustrates an example of a radar system 900. The radar system 900 comprise an apparatus 910 as described herein, such as apparatus 100, and the radar sensor 920. The radar sensor 920 is configured to emit a radar signal and receive a reflection of said radar signal, yielding the received radar signal. For instance, the radar sensor 920 may comprise at least one antenna configured to emit the radar signal.

Although the apparatus 910 and the radar sensor 920 are depicted as separate blocks in Fig. 9, in other examples, the apparatus 910 may in part or in entirety be included in the radar sensor 920, which thus correspondingly includes all or part of the processing circuitry 110 of the apparatus 910.

In case the apparatus 910 is only partially included in the radar sensor 920, the radar system 900 may include distributed processing circuitry carrying out respective parts of the processing steps, e.g., in the form of first processing (sub-) circuitry included in the radar sensor 920, and second processing (sub-) circuitry external to the sensor and in communication with the first processing circuitry through interface circuitry (e.g., interface circuitry 120), for instance, for exchange of data between the first and the second processing circuitry.

In case the apparatus 910 is integrated in the radar sensor 920, the processing circuitry and the radar sensor 920 may be jointly integrated in a single semiconductor chip, or in more than one semi-conductor chip.

In case the apparatus 910 is not included in the radar sensor 920, the circuitry may take the form of circuitry external to the radar sensor 920 and may be communicatively coupled therewith through interface circuitry.

The radar sensor 920 may optionally be configured to receive the reflection from a near field of the radar sensor 920. The radar sensor 920 may be an FMCW radar sensor, for instance.

More details and aspects of the radar system 900 are explained in connection with the proposed technique or one or more examples described above, e.g., with reference to Fig. 1. The radar system 900 may comprise one or more additional optional features corresponding to one or more aspects of the proposed technique, or one or more examples described above.

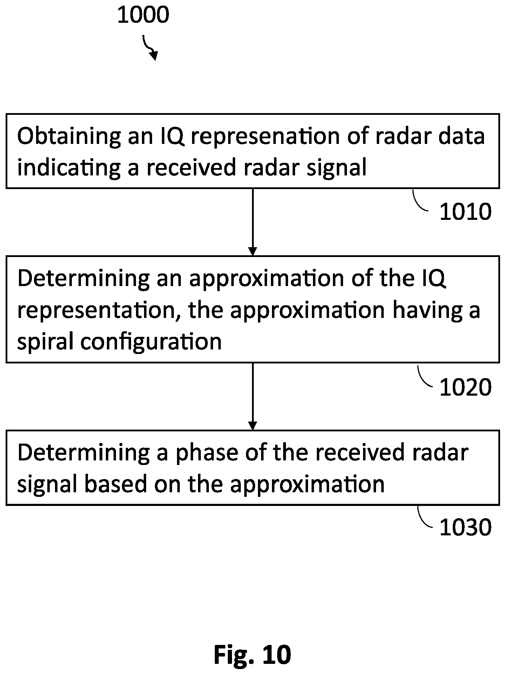

**Fig. 10** illustrates an example of a method 1000. The method 1000 may be executed by an apparatus as described herein, such as apparatus 100. The method 1000 comprises obtaining 1010 an IQ representation of the radar data indicating a received radar signal, determining 1020 an approximation of the IQ representation, the approximation having a spiral characteristic configuration and determining 1030 a phase of the received radar signal based on the approximation.

More details and aspects of the method 1000 are explained in connection with the proposed technique or one or more examples described above, e.g., with reference to Fig. 1. The method 1000 may comprise one or more additional optional features corresponding to one or more aspects of the proposed technique, or one or more examples described above.

In the following, some examples of the proposed technique are presented:

An example (e.g., example 1) relates to a method comprising obtaining an IQ representation of radar data indicating a received radar signal, determining an approximation of the IQ representation, the approximation having a spiral configuration, and determining a phase of the received radar signal based on the approximation.

Another example (e.g., example 2) relates to a previous example (e.g., example 1) or to any other example, further comprising that the approximation is determined through determining a polynomial approximation of a spiral shape for the IQ representation.

Another example (e.g., example 3) relates to a previous example (e.g., one of the examples 1 or 2) or to any other example, further comprising that determining the approximation comprises matching respective segments of multiple circles or ellipses to respective parts of the IQ representation, the segments jointly reproducing the spiral configuration.

Another example (e.g., example 4) relates to a previous example (e.g., one of the examples 1 to 3) or to any other example, further comprising that the approximation is determined through applying manifold learning to the IQ representation.

Another example (e.g., example 5) relates to a previous example (e.g., example 4) or to any other example, further comprising that the manifold learning comprises using isometric feature mapping.

Another example (e.g., example 6) relates to a previous example (e.g., one of the examples 1 to 5) or to any other example, further comprising that the approximation is determined through fitting a spiral function to the IQ representation.

Another example (e.g., example 7) relates to a previous example (e.g., one of the examples 1 to 6) or to any other example, further comprising that the approximation is determined through using a least-squares method.

Another example (e.g., example 8) relates to a previous example (e.g., one of the examples 1 to 7) or to any other example, further comprising that the phase is determined through applying an arc-tangent demodulation to the approximation.

Another example (e.g., example 9) relates to a previous example (e.g., one of the examples 1 to 8) or to any other example, further comprising that the phase is determined through linearizing the phase with respect to an arc length of the approximation.

Another example (e.g., example 10) relates to a previous example (e.g., one of the examples 1 to 9) or to any other example, further comprising estimating a center of a spiral shape of the IQ representation and determining the approximation based on the estimated center.

Another example (e.g., example 11) relates to a previous example (e.g., example 10) or to any other example, further comprising that the center is estimated through applying an ellipse fitting method or a circle fitting method to the IQ representation.

Another example (e.g., example 12) relates to a previous example (e.g., example 11) or to any other example, further comprising that the ellipse fitting method or the circle fitting method is applied to a predefined winding of the spiral shape.

Another example (e.g., example 13) relates to a previous example (e.g., one of the examples 1 to 12) or to any other example, further comprising estimating a provisional phase of the received radar signal based on the IQ representation, compressing the IQ representation with respect to the provisional phase, and determining the approximation for the compressed IQ representation.

Another example (e.g., example 14) relates to a previous example (e.g., one of the examples 1 to 13) or to any other example, further comprising mapping data points of the IQ representation to data points of the approximation and determining the phase of the received radar signal based on the mapped data points.

Another example (e.g., example 15) relates to a previous example (e.g., one of the examples 1 to 14) or to any other example, further comprising determining a motion of a target based on the determined phase.

Another example (e.g., example 16) relates to a previous example (e.g., example 15) or to any other example, further comprising that the motion comprises a motion of a blood vessel of a living being, the method further comprising determining a blood pressure of the living being based on the determined phase.

Another example (e.g., example 17) relates to a non-transitory machine-readable medium having stored thereon a program having a program code for performing the method of any one of examples 1 to 16, when the program is executed on a processor or a programmable hardware.

Another example (e.g., example 18) relates to a program having a program code for performing the method of any one of examples 1 to 16, when the program is executed on a processor or a programmable hardware.

An example (e.g., example 19) relates to an apparatus comprising processing circuitry configured to obtain an IQ representation of radar data indicating a received radar signal, determine an approximation of the IQ representation, the approximation having a spiral configuration, and determine a phase of the received radar signal based on the approximation.

An example (e.g., example 20) relates to a radar system, comprising the apparatus of example 19, and a radar sensor configured to emit a radar signal and receive a reflection of said radar signal, yielding the received radar signal.

Another example (e.g., example 21) relates to a previous example (e.g., example 20) or to any other example, further comprising that the radar sensor is configured to receive the reflection from a near field of the radar sensor.

Another example (e.g., example 22) relates to a previous example (e.g., one of the examples 20 or 21) or to any other example, further comprising that the radar sensor is a frequency-modulated continuous-wave radar sensor.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F) PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1.  A method (1000) comprising:

    obtaining (1010) an IQ representation (130) of radar data indicating a received radar signal;
    determining (1020) an approximation (140) of the IQ representation (130), the approximation (140) having a spiral configuration; and
    determining (1030) a phase (150) of the received radar signal based on the approximation (140).

2.  The method (1000) of claim 1, wherein the approximation is determined through determining a polynomial approximation of a spiral shape for the IQ representation.

3.  The method (1000) of any one of the previous claims, wherein determining the approximation (140) comprises matching respective segments of multiple circles or ellipses to respective parts of the IQ representation (130), the segments jointly reproducing the spiral configuration.

4.  The method (1000) of any one of the previous claims, wherein the approximation (140) is determined through applying manifold learning to the IQ representation (130).

5.  The method (1000) of any one of the previous claims, wherein the approximation (140) is determined through fitting a spiral function to the IQ representation (130).

6.  The method (1000) of any one of the previous claims, wherein the phase (150) is determined through applying an arc-tangent demodulation to the approximation (140).

7.  The method (1000) of any one of the previous claims, wherein the phase (150) is determined through linearizing the phase (150) with respect to an arc length of the approximation (140).

8. The method (1000) of any one of the previous claims, further comprising estimating a center of a spiral shape of the IQ representation (130) and determining the approximation (140) based on the estimated center.

9. The method (1000) of claim 8, wherein the center is estimated through applying an ellipse fitting method or a circle fitting method to the IQ representation (130).

10. The method (1000) of claim 9, wherein the ellipse fitting method or the circle fitting method is applied to a predefined winding of the spiral shape.

11. The method (1000) of any one of the previous claims, further comprising:

   estimating a provisional phase of the received radar signal based on the IQ representation (130);
   compressing the IQ representation (130) with respect to the provisional phase; and
   determining the approximation (140) for the compressed IQ representation (130).

12. The method (1000) of any one of the previous claims, further comprising determining a motion of a target based on the determined phase (150).

13. The method (1000) of claim 12, wherein the motion comprises a motion of a blood vessel of a living being, the method (1000) further comprising determining a blood pressure of the living being based on the determined phase (150).

14. An apparatus (100) comprising processing circuitry (110) configured to:

   obtain an IQ representation (130) of radar data indicating a received radar signal;
   determine an approximation (140) of the IQ representation (130), the approximation (140) having a spiral configuration; and
   determine a phase (150) of the received radar signal based on the approximation (140).

15. A radar system (900), comprising:

   the apparatus (910) of claim 14; and
   a radar sensor (920) configured to emit a radar signal and receive a reflection of said radar signal, yielding the received radar signal.

100

110

120

130

140

150

**Fig. 1**

200

210

**Fig. 2a**

200

210

**Fig. 2b**

200

210

**Fig. 2c**

**Fig. 3a**

**Fig. 3b**

Fig. 4

**Fig. 5**

ISOMAP manifold learning

Fig. 6

**Fig. 7**

700

**Fig. 8**

800

810 — raw data
820 — compressed data
830 — polyfit data
840 — t=0
850 — t=1

900

910

920

**Fig. 9**

1000

Obtaining an IQ represenation of radar data indicating a received radar signal

1010

Determining an approximation of the IQ representation, the approximation having a spiral configuration

1020

Determining a phase of the received radar signal based on the approximation

1030

**Fig. 10**

Europäisches
Patentamt
European
Patent Office
Office européen
des brevets

# EUROPEAN SEARCH REPORT

**Application Number**

EP 23 21 3792

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WILL CHRISTOPH ET AL: "Segmental polynomial approximation based phase error correction for precise near field displacement measurements using Six-Port microwave interferometers", 2017 IEEE TOPICAL CONFERENCE ON WIRELESS SENSORS AND SENSOR NETWORKS (WISNET), IEEE, 15 January 2017 (2017-01-15), pages 23-25, XP033076579, DOI: 10.1109/WISNET.2017.7878746 | 1-3, 5-10,14, 15 | INV. G01S7/35 G01S13/88 ADD. G01S13/34 |
| Y | * the whole document * | 1-3, 5-10, 12-15 | |
| Y | EP 3 901 651 A1 (INFINEON TECHNOLOGIES AG [DE]) 27 October 2021 (2021-10-27) * paragraphs [0024], [0042], [0043], [0046], [0048], [0051], [0053], [0058]; figures 2-4,6 * | 1-3, 5-10, 12-15 | |
| Y | US 2010/292568 A1 (DROITCOUR AMY [US] ET AL) 18 November 2010 (2010-11-18) * paragraphs [0254], [0255], [0274] - [0277], [0690], [0694] - [0696]; figures 1A,7,8 * | 7,13 | TECHNICAL FIELDS SEARCHED (IPC) G01S |

The present search report has been drawn up for all claims

| Place of search | Date of completion of the search | Examiner |
|---|---|---|
| Munich | 24 April 2024 | Schmelz, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 23 21 3792

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-3, 5-10, 12-15

☐ The present supplementary European search report has been drawn up for those parts of the European patent application which relate to the invention first mentioned in the claims (Rule 164 (1) EPC).

| | | Application Number |
|---|---|---|
| Europäisches Patentamt European Patent Office Office européen des brevets | **LACK OF UNITY OF INVENTION SHEET B** | EP 23 21 3792 |

The Search Division considers that the present European patent application does not comply with the requirements of unity of invention and relates to several inventions or groups of inventions, namely:

```
     1. claims: 1-3, 5-10, 12-15

          Phase correction via curve fitting of I/Q-plot.
          Problem solved: More accurate phase determination.
                                 - - -


     2. claims: 4, 11

          Dimension reduction or data compression.
          Problem solved: Reduction of computational effort (as stated
          in the description of the application).
                                 - - -
```

# ANNEX TO THE EUROPEAN SEARCH REPORT
## ON EUROPEAN PATENT APPLICATION NO.

EP 23 21 3792

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2024

| Patent document cited in search report | | Publication date | Patent family member(s) | | Publication date |
|---|---|---|---|---|---|
| EP 3901651 | A1 | 27-10-2021 | CN | 113520344 A | 22-10-2021 |
| | | | EP | 3901651 A1 | 27-10-2021 |
| | | | US | 2021325509 A1 | 21-10-2021 |
| US 2010292568 | A1 | 18-11-2010 | US | 2010152600 A1 | 17-06-2010 |
| | | | US | 2010240999 A1 | 23-09-2010 |
| | | | US | 2010249630 A1 | 30-09-2010 |
| | | | US | 2010249633 A1 | 30-09-2010 |
| | | | US | 2010292568 A1 | 18-11-2010 |
| | | | WO | 2010132850 A1 | 18-11-2010 |

EPO FORM P0459

For more details about this annex : see Official Journal of the European Patent Office, No. 12/82